# EUROPÄISCHE PATENTSCHRIFT

(11) **EP 2 372 148 B1**
(45) Veröffentlichungstag und Bekanntmachung des Hinweises auf die Patenterteilung: **09.05.2012**
(21) Anmeldenummer: 10003558.3
(22) Anmeldetag: 31.03.2010
(51) Int. Cl.: F03D 9/00, F03D 11/00, F03D 11/02

(54) **Antriebsvorrichtung für eine Windkraftanlage**
Drive device for a wind power system
Dispositif d'entraînement pour une éolienne

(43) Veröffentlichungstag der Anmeldung: 05.10.2011
(73) Patentinhaber: Winergy AG, 46562 Voerde (DE)
(72) Erfinder: Klein-Hitpass, Arno, 52074 Aachen (DE); Reimers, Jan-Dirk, 52074 Aachen (DE)
(74) Vertreter: Michau, Sascha

(56) Entgegenhaltungen:
- EP-A2- 1 167 818
- WO-A1-01/48395
- WO-A1-2008/092448

## Beschreibung

Aus US 6,731,017 ist eine Antriebsvorrichtung für eine Windkraftanlage bekannt, bei dem ein Rotor über eine Rotorwelle mit einem außenverzahnten Zentralrad verbunden ist, um dessen Umfang eine Vielzahl Ritzelwellen angeordnet sind. Jede dieser Ritzelwellen umfaßt an einem ersten Ende ein mit dem Zentralrad kämmendes Ritzel, während an einem zweiten Ende ein Zahnrad angeordnet ist. Jeweils zwei Ritzelwellen bilden ein Ritzelwellenpaar. Das Zahnrad einer ersten Ritzelwelle eines Ritzelwellenpaars ist an einer dem Rotor zugewandten Seite des Zentralrads angeordnet. Dagegen ist das Zahnrad der zweiten Ritzelwelle eines Ritzelwellenpaars an einer dem Rotor abgewandten Seite des Zentralrads angeordnet. Beide Zahnräder eines Ritzelwellenpaar stehen in Eingriff mit Ritzeln an einer dem Ritzelwellenpaar zugeordneten Summierwelle. Jede Summierwelle ist wiederum mit jeweils einem von mehreren Generatoren der Windkraftanlage verbunden.

In EP 1 279 867 B1 ist ein mehrstufiges Getriebe mit einer inneren Leistungsaufteilung beschrieben, das ein mit einer Eingangswelle bzw. Ausgangswelle verbundenes außenverzahntes Großzahnrad umfaßt. Das Großzahnrad ist von mehreren Ritzelwellen umgeben, deren Zahnritzel mit dem Großzahnrad kämmen. Die Ritzelwellen tragen je ein Zahnrad. Zwei Zahnräder bilden jeweils ein Zahnradpaar und sind wechselweise vor und hinter dem Großzahnrad angeordnet. Die Zahnräder sind mit einer Schrägverzahnung von unterschiedlicher Steigungsrichtung versehen und stehen mit einer gemeinsamen, doppelschrägverzahnten, axial frei gelagerten Ritzelwelle in Eingriff. Das Großzahnrad ist von insgesamt acht Ritzelwellen umgeben, deren Zahnräder mit vier jeweils einem Zahnradpaar gemeinsamen, doppelschrägverzahnten, axial frei gelagerten Ritzelwellen in Eingriff stehen und mit diesen eine erste Stufe der Leistungsaufteilung bilden. Die vier Ritzelwellen der ersten Stufe der Leistungsaufteilung stehen mit vier Ritzelwellen einer zweiten Stufe der Leistungsaufteilung in Verbindung. Die vier Ritzelwellen der zweiten Stufe der Leistungsaufteilung tragen wiederum je ein Zahnrad, wobei zwei Zahnräder ein Zahnradpaar bilden. Die Zahnräder eines Zahnradpaares stehen mit zwei jeweils einem Zahnradpaar gemeinsamen, frei gelagerten Ritzelwellen in Eingriff.

Aus EP 1 619 386 B1 ist ein mehrstufiges leistungsverzweigtes Windkraftgetriebe für eine Windkraftanlage höherer Leistung bekannt, das sich gegenüber dem in EP 1 279 867 B1 beschriebenen Getriebe insbesondere dadurch unterscheidet, daß anstelle einer Leistungsverzweigung auf zwei oder mehr parallele Abtriebswellen eine Leistungsverzweigung auf nur eine generatorseitige Welle erfolgt. Sämtliche Ritzelwellen sind einfach schrägverzahnt und über mindestens zwei beabstandete reine Radiallager und mindestens ein reines Axiallager gelagert. Damit ist bereits für die Lagerung der Ritzelwellen eine hohe Teilevielzahl erforderlich.

Der vorliegenden Erfindung liegt die Aufgabe zugrunde, eine Antriebsvorrichtung für eine Windkraftanlage zu schaffen, die eine erhöhte Zuverlässigkeit und eine verbesserte Servicefähigkeit ermöglicht. WO 2008/092 448 offenbart ein weiteres Beispiel einer Antriebsvorrichtung einer Windkraftanlage.

Diese Aufgabe wird erfindungsgemäß durch eine Antriebsvorrichtung mit den in Anspruch 1 angegebenen Merkmalen gelöst. Vorteilhafte Weiterbildungen der vorliegenden Erfindung sind in den abhängigen Ansprüchen angegeben.

Die erfindungsgemäße Antriebsvorrichtung für eine Windkraftanlage umfaßt mindestens zwei zumindest dreischenklige Trägerelemente zur Lagerung von zumindest drei Ritzelwellen. Die Ritzelwellen sind jeweils mittels an Eckpunkten der Trägerelemente angeordneten Ritzelwellenlagern gelagert. Die Ritzelwellenlager sind durch Lagersitzelemente an den Trägerelementen befestigt. Mindestens ein Trägerelement ist zusätzlich zur Lagerung einer mit einer Rotornabe verbindbaren Anschlußwelle ausgestaltet, die von diesem Trägerelement umgeben ist und deren Achse durch den Mittelpunkt des Trägerelements verläuft. Eine erste Getriebestufe der erfindungsgemäßen Antriebsvorrichtung weist ein außenverzahntes Zentralrad auf. Das Zentralrad ist auf der beispielsweise als Hohlwelle ausgestalteten Anschlußwelle befestigt und kämmt mit zumindest drei Ritzeln der ersten Getriebestufe, die an ersten Enden der Ritzelwellen angeordnet sind. An zweiten Enden der Ritzelwellen sind zumindest drei Zahnräder einer zweiten Getriebestufe angeordnet, die mit einem Zentralritzel der zweiten Getriebestufe kämmen. Aufgrund ihrer integrativen Bauweise ermöglicht die erfindungsgemäße Antriebsvorrichtung erhebliche Gewichtseinsparungen. Durch eine einfache Demontierbarkeit der Ritzelwellen sind auch Zentralrad und Zentralritzel für Wartungsarbeiten gut zugänglich. Aufgrund einer einfachen Zugänglichkeit von Verschleißteilen ergibt sich eine verbesserte Servicefähigkeit. Des weiteren resultiert aus einer Reduzierung von Funktionsbauteilen eine Zuverlässigkeitssteigerung.

Entsprechend einer vorteilhaften Weiterbildung der vorliegenden Erfindung sind drei Trägerelemente vorgesehen. Dabei ist ein Trägerelement rotorseitig angeordnet, während ein anderes Trägerelement generatorseitig angeordnet ist. Axial zwischen dem rotorseitigen Trägerelement und dem generatorseitigen Trägerelement ist ein zentrales Trägerelement angeordnet. Das Zentralrad und die Ritzel der ersten Getriebestufe können axial zwischen dem rotorseitigen Trägerelement und dem zentralen Trägerelement angeordnet werden. Darüber hinaus können die Zahnräder und das Zentralritzel der zweiten Getriebestufe axial zwischen dem zentralen Trägerelement und dem generatorseitigen Trägerelement angeordnet werden. Des weiteren können das rotorseitige Trägerelement und das zentrale Trägerelement Lagersitze für die Anschlußwelle bzw. für eine Rotorwelle aufweisen. Zusätzlich kann das generatorseitige Trägerelement mit einem Lagersitz für eine mit dem Zentralritzel der zweiten Getriebestufe verbundene Welle versehen sein. Auf diese Weise ergibt sich eine besonders servicefreundliche Ausgestaltung der erfindungsgemäßen Antriebsvorrichtung.

Die vorliegende Erfindung wird nachfolgend an einem Ausführungsbeispiel anhand der Zeichnung näher erläutert. Es zeigt
- Figur 1: eine Antriebsvorrichtung für eine Windkraftanlage mit drei dreischenkligen Trägerelementen zur Monta- ge in einer Gondel,
- Figur 2: eine Getriebeeinheit der in Figur 1 dargestellten Antriebsvorrichtung,
- Figur 3: die Antriebsvorrichtung gemäß Figur 1 in einer Schnittdarstellung,
- Figur 4: die Getriebeeinheit gemäß Figur 2 mit einer demon- tierten Ritzelwelle,
- Figur 5: die Getriebeeinheit gemäß Figur 2 mit einem von ei- ner Rotorwelle getrennten Zentralrad.

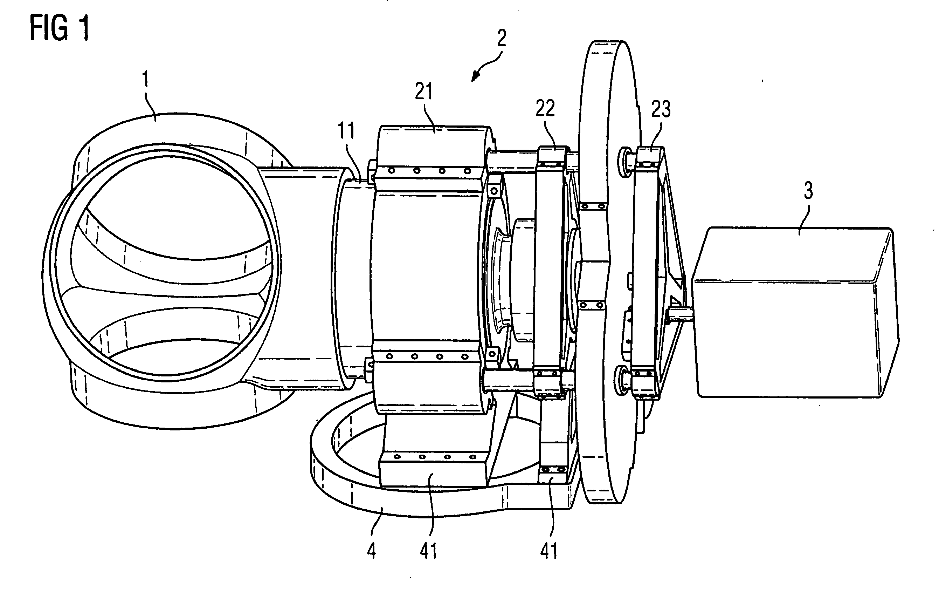

Die in Figur 1 dargestellte Antriebsvorrichtung für eine Windkraftanlage umfaßt eine mit einer Rotornabe 1 verbundene Rotorwelle 11, eine Getriebeeinheit 2 und einen Generator 3. Die Getriebeeinheit 2 umfaßt drei dreischenklige Trägerelemente 21-23. Grundsätzlich können auch Trägerelemente mit viereckiger, insbesondere quadratischer Grundform oder in beliebiger anderer mehrschenkliger Ausführung verwendet werden. Hierbei erhöht sich die Anzahl der Ritzelwellen entsprechend. Des weiteren müssen die Schenkel der Trägerelemente nicht zwangsläufig gerade gestaltet sein, sondern können beispielsweise eine konkave oder konvexe Form aufweisen. Bei einer konvexen Form können die Trägerelemente im Querschnitt eine annähernd kreisförmige Gestalt haben.

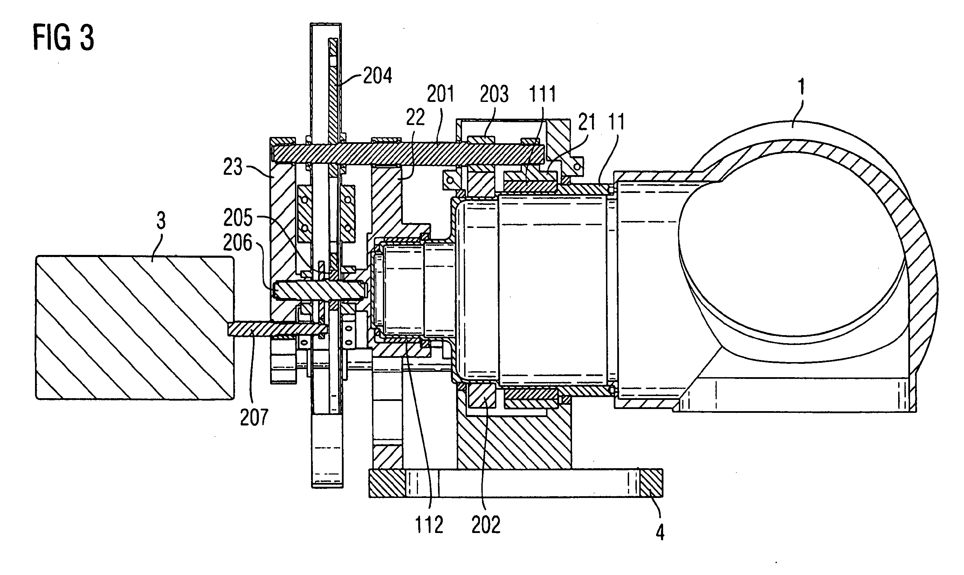

Entsprechend Figur 1 ist ein Trägerelement 21 rotorseitig angeordnet ist, ein anderes Trägerelement 23 generatorseitig, und axial zwischen dem rotorseitigen Trägerelement 21 und dem generatorseitigen Trägerelement 22 ist ein zentrales Trägerelement 22 angeordnet. Das rotorseitige Trägerelement 21 und das zentrale Trägerelement 22 sind im vorliegenden Ausführungsbeispiel jeweils über einen Zwischenträger 41 auf einem Grundträger 4 abgestützt, der einen Sitz für ein Azimutlager der Windkraftanlage aufweist. Dies ist auch in der Schnittdarstellung gemäß Figur 3 zu erkennen. Das rotorseitige Trägerelement 21 und das zentrale Trägerelement 22 weisen Sitze für ein rotorseitiges Rotorwellenlager 111 bzw. ein generatorseitiges Rotorwellenlager 112 auf. Die als Hohlwelle ausgestaltete Rotorwelle 11 ist dabei radial vom rotorseitigen Trägerelement 21 und vom zentralen Trägerelement 22 umgeben, wobei ihre Achse durch den Mittelpunkt der beiden Trägerelemente 21-22 verläuft.

Die Trägerelemente 21-23 können zusammen mit dem Grundträger 4 und dem Zwischenträger ein tragendes Strukturelement für eine Gondel einer Windkraftanlage bilden. Außerdem können die Trägerelemente 21-23 auch in ein Getriebegehäuse integriert sein.

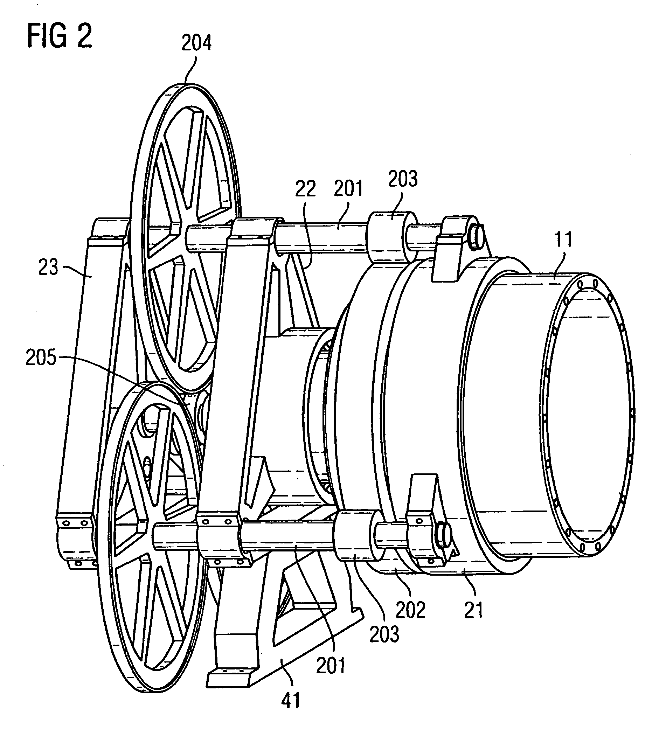

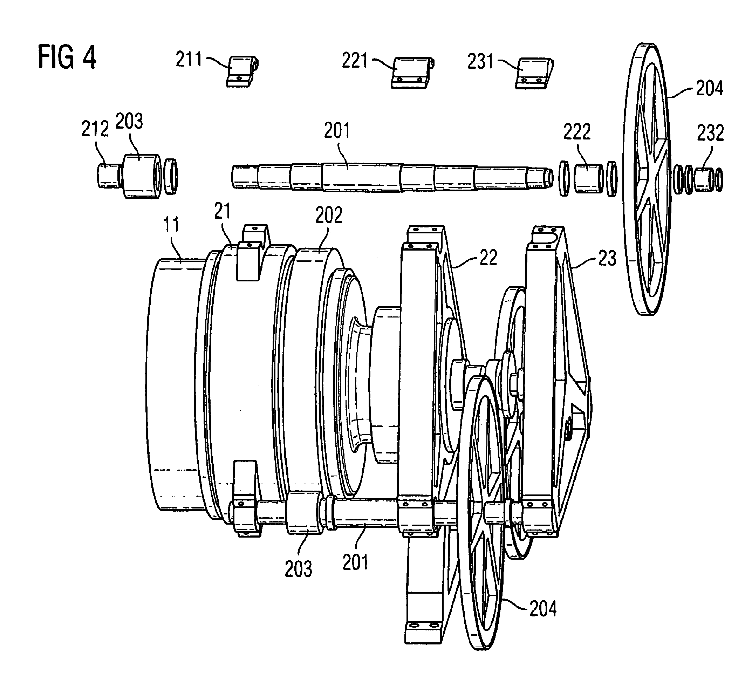

Die dreischenkligen Trägerelemente 21-23 der in Figur 2 dargestellten Getriebeeinheit weisen Lagersitze für drei Ritzelwellen 201 auf. In Figur 4 ist im Detail zu erkennen, daß die Ritzelwellen 201 jeweils mittels an Eckpunkten der Trägerelemente 21-23 angeordneten Ritzelwellenlagern 212, 222, 232 gelagert sind, und zwar sowohl radial als auch axial. Die Ritzelwellenlager 212, 222, 232 sind wiederum durch demontierbare Lagersitzelemente 211, 221, 231 an den Trägerelementen 21-23 befestigt. Auf diese Weise ist beispielsweise zu Wartungszwecken eine einfache Demontage der Ritzelwellen 201 einschließlich mit den Ritzelwellen 201 verbundener Verzahnungsteile möglich.

Eine erste Getriebestufe weist ein außenverzahntes Zentralrad 202 auf, das auf der Rotorwelle 11 drehsteif befestigt ist und mit drei Ritzeln 203 der ersten Getriebestufe kämmt, die an rotorseitigen Enden der Ritzelwellen 201 angeordnet sind. Das Zentralrad 202 und die Ritzel 203 der ersten Getriebestufe sind axial zwischen dem rotorseitigen Trägerelement 21 und dem zentralen Trägerelement 22 angeordnet.

An generatorseitigen Enden der Ritzelwellen 201 sind drei Zahnräder 204 einer zweiten Getriebestufe angeordneten, die mit einem Zentralritzel 205 der zweiten Getriebestufe kämmen. Die Zahnräder 204 und das Zentralritzel 205 der zweiten Getriebestufe sind axial zwischen dem zentralen Trägerelement 22 und dem generatorseitigen Trägerelement 23 angeordnet. Sowohl das generatorseitige Trägerelement 23 als auch das zentrale Trägerelement 22 weisen jeweils einen Lagersitz für eine mit dem Zentralritzel 205 der zweiten Getriebestufe verbundene Welle 206 auf. Mit dieser Welle 206 ist im vorliegenden Ausführungsbeispiel ein Zahnrad einer dritten Getriebestufe drehfest verbunden, das mit einem Ritzel an einer generatorseitigen Abtriebswelle 207 kämmt. Bei Verwendung einer Stirnradstufe als dritter Getriebestufe kann ein hierdurch bedingter Achsversatz zwischen Rotor- und Generatorwelle beispielsweise zur Durchführung von Steuerungskabeln für ein Pitch-Antriebssystem genutzt werden. Anstelle einer Verwendung einer dritten Getriebestufe kann das Zentralritzel 205 der zweiten Getriebestufe unmittelbar oder über eine Kupplung mit einer Generatorwelle verbunden sein.

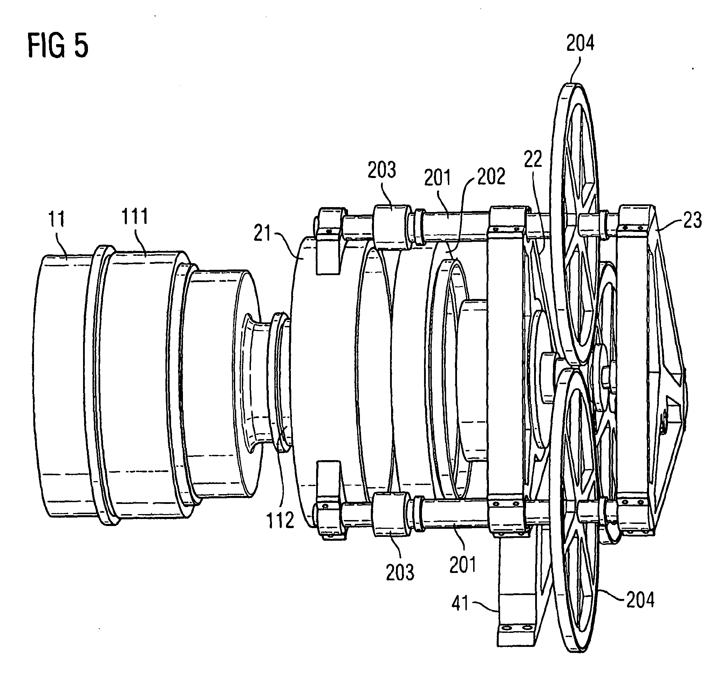

In Figur 5 ist veranschaulicht, daß nicht nur die Ritzelwellen 201 für Wartungszwecke auf einfache Weise demontiert werden können, sondern daß auch das Zentralrad 202 der ersten Getriebestufe und das Zentralritzel 205 der zweiten Getriebestufe auf einfache Weise zugänglich sind. Hierzu ist die Rotorwelle 11 aus den Trägerelementen 21-22 herausziehbar ausgestaltet, so daß auch die Rotorwellenlager 111, 112 einfach zugänglich sind. Durch Lösen der Lagersitzelemente 211, 221, 231 können die Ritzelwellen 201 aus der Antriebsvorrichtung ausgebaut werden. Das Zentralrad 202 der ersten Getriebestufe kann so durch axiales Verschieben der Rotorwelle 11 und Demontage einer oberen Ritzelwelle 201 einfach ausgebaut werden.

Montage und Wartung eines Triebsstrangs entsprechend dem vorliegenden Ausführungsbeispiel sind insgesamt sehr einfach. Andererseits lassen sich alle Hauptbaugruppen, wie Rotornabe, Ritzelwellen, Zwischenstufe, oder Abtrieb, einzeln vormontieren, bevor sie in den Triebsstrang eingebaut werden. Umgekehrt können bei Wartungs- oder Instandsetzungsarbeiten einzelne Baugruppen einfach entfernt werden.

Mit der vorliegenden Antriebsvorrichtung können darüber hinaus große Achsabstände realisiert werden. Somit können hohe Getriebeübersetzungen mit nur verhältnismäßig wenigen Bauteilen erreicht werden. Aufgrund dessen eignet sich die beschriebene Antriebsvorrichtung besonders für einen Einsatz in Windkraftanlagen mit Leistungen im Multimegawattbereich. Dies gilt beispielweise auch für Mühlenantriebssysteme oder sonstige Schwerlastantriebssysteme, wobei die Rotorwelle dort einer Abtriebswelle entspricht und die Generatorwelle einer Motorwelle.

Je nach Ausführung werden für eine dem vorliegenden Ausführungsbeispiel entsprechende Antriebsvorrichtung 8-10 Zahnräder, 10-16 Getriebelager und zwei Rotor- bzw. Abtriebswellenlager verwendet. Die Lager sind vorzugsweise als Gleitlager ausgeführt. Eine Ölabdichtung der Antriebsvorrichtung erfolgt beispielsweise über dünnwandige Verkleidungselemente, welche an Trägerelementen oder sonstigen tragenden Strukturelementen befestigt sind.

Ein Lastausgleich kann bei der vorliegenden Antriebsvorrichtung über torsionsweiche Ritzelwellen sichergestellt werden. Des weiteren können durch lange Ritzelwellen Systemverformungen kompensiert werden. Ein sicheres Zahneingriffsverhalten der zweiten Getriebestufe wird vorzugsweise durch Führungselemente sichergestellt, die im Bereich des Zahngriffs zwischen Zahnrädern und Zentralritzel der zweiten Getriebestufe angeordnet sind.

## Patentansprüche

1. Antriebsvorrichtung für eine Windkraftanlage mit
- mindestens zwei zumindest dreischenkligen Trägerelementen (21, 22, 23) zur Lagerung von zumindest drei Ritzelwellen (201), die jeweils mittels an Eckpunkten der Trägerelemente angeordneten Ritzelwellenlagern (212, 222, 232) gelagert sind, die durch Lagersitzelement (211, 221, 231) an den Trägerelementen befestigt sind, wobei mindestens ein Trägerelement (21) zusätzlich zur Lagerung einer mit einer Rotornabe verbindbaren Anschlußwelle (11) ausgestaltet ist, die von diesem Trägerelement (21) umgeben ist und deren Achse durch den Mittelpunkt des Trägerelements verläuft,
- einer ersten Getriebestufe (202, 203), die ein außenverzahntes Zentralrad (202) aufweist, das auf der Anschlußwelle befestigt ist und mit zumindest drei Ritzeln (203) der ersten Getriebestufe kämmt, die an ersten Enden der Ritzelwellen (201) angeordnet sind,
- mindestens drei an zweiten Enden der Ritzelwellen angeordneten Zahnrädern (204) einer zweiten Getriebestufe, die mit einem Zentralritzel (205) der zweiten Getriebestufe kämmen.

2. Antriebsvorrichtung nach Anspruch 1,
bei der das Zentralritzel (205) der zweiten Getriebestufe unmittelbar mit einer Generator- oder Motorwell (207) verbunden ist.

3. Antriebsvorrichtung nach Anspruch 1,
bei der das Zentralritzel (205) der zweiten Getriebestufe über eine Kupplung mit einer Generator- oder Motorwelle verbunden ist.

4. Antriebsvorrichtung nach Anspruch 1,
bei der das Zentralritzel (205) der zweiten Getriebestufe über eine weitere Getriebestufe mit einer Generator- oder Motorwelle (11) verbunden ist.

5. Antriebsvorrichtung nach einem der Ansprüche 1 bis 4,
bei der die mit Rotornabe verbindbare Anschlußwelle eine Rotorwelle (11) ist, und bei dem die ersten Enden der Ritzelwellen (201) rotorsseitige Enden sind, und bei dem die zweiten Enden der Ritzelwellen (201) generatorseitige Enden sind.

6. Antriebsvorrichtung nach Anspruch 5,
bei der drei Trägerelemente (21, 22, 23) vorgesehen sind, und bei dem ein Trägerelement (21) rotorseitig angeordnet ist, und bei dem ein Trägerelement (23) generatorseitig angeordnet ist, und bei dem ein zentrales Trägerelement (22) axial zwischen dem rotorseitigen Trägerelement (21) und dem generatorseitigen Trägerelement (23) angeordnet ist.

7. Antriebsvorrichtung nach Anspruch 6,
bei der das Zentralrad (202) und die Ritzeil (203) der ersten Getriebestufe axial zwischen dem rotorseitigen Trägerelement (21) und dem zentralen Trägerelement (22) angeordnet sind.

8. Antriebsvorrichtung nach einem der Ansprüche 6 oder 7,
bei der die Zahnräder (204) und das Zentralritzel (205) der zweiten Getriebestufe axial zwischen dem zentralen Trägerelement (22) und dem generatorseitigen Trägerelement (23) angeordnet sind.

9. Antriebsvorrichtung nach einem der Ansprüche 6 bis 8,
bei der das rotorseitige Trägerelement (21) und das zentrale Trägerelement (22) Lagersitze für die Rotorwelle (11) aufweisen.

10. Antriebsvorrichtung nach einem der Ansprüche 6 bis 9,
bei der das generatorseitige Trägerelement (23) einen Lagersitz für eine mit dem Zentralritzel (205) der zweiten Getriebestufe verbundene Welle aufweist.

11. Antriebsvorrichtung nach einem der Ansprüche 1 bis 10,
bei der die Trägerelemente in ein Getriebegehäuse integriert sind.

12. Antriebsvorrichtung nach einem der Ansprüche 1 bis 11,
bei der die Lagersitzelemente (211, 221, 231) von den Trägerelementen (21, 22, 25) demontierbar sind.

13. Antriebsvorrichtung nach einem der Ansprüche 1 bis 12,
bei der die Anschlußwelle (11) als Hohlwelle ausgestaltet ist.

## Claims

1. Drive apparatus for a wind power installation having
- at least two support elements (21, 22, 23), which have at least three limbs, for bearing at least three pinion shafts (201), which are each borne by means of pinion shaft bearings (212, 222, 232) which are arranged on the corner points of the support elements and are attached to the support elements by bearing seat elements (211, 221, 231), with at least one support element (21) additionally being designed to bear a connecting shaft (11), which can be connected to a rotor hub and is surrounded by this support element (21), and whose axis runs through the centre point of the support element,
- a first gearbox stage (202, 203), which has a central wheel (202) with an external tooth system, which central wheel (202) is mounted on the connecting shaft and engages with at least three pinions (203) in the first gearbox stage, which pinions (203) are arranged at first ends of the pinion shafts (201),
- at least three gearwheels (204), which are arranged at second ends of the pinion shafts, of a second gearbox stage, which gearwheels (204) engage with a central pinion (205) in the second gearbox stage.

2. Drive apparatus according to Claim 1,
in which the central pinion (205) of the second gearbox stage is directly connected to a generator or motor shaft (207).

3. Drive apparatus according to Claim 1,
in which the central pinion (205) in the second gearbox stage is connected via a clutch to a generator or motor shaft.

4. Drive apparatus according to Claim 1,
in which the central pinion (205) in the second gearbox stage is connected via a further gearbox stage to a generator or motor shaft (11).

5. Drive apparatus according to one of Claims 1 to 4,
in which the connecting shaft, which can be connected to the rotor hub, is a rotor shaft (11), and in which the first ends of the pinion shafts (201) are rotor-side ends, and in which the second ends of the pinion shafts (201) are generator-side ends.

6. Drive apparatus according to Claim 5,
in which three support elements (21, 22, 23) are provided, and in which one support element (21) is arranged on the rotor side, and in which one support element (23) is arranged on the generator side, and in which a central support element (22) is arranged axially between the rotor-side support element (21) and the generator-side support element (23).

7. Drive apparatus according to Claim 6,
in which the central wheel (202) and the pinion (203) in the first gearbox stage are arranged axially between the rotor-side support element (21) and the central support element (22).

8. Drive apparatus according to one of Claims 6 or 7,
in which the gearwheels (204) and the central pinion (205) in the second gearbox stage are arranged axially between the central support element (22) and the generator-side support element (23).

9. Drive apparatus according to one of Claims 6 to 8,
in which the rotor-side support element (21) and the central support element (22) have bearing seats for the rotor shaft (11).

10. Drive apparatus according to one of Claims 6 to 9,
in which the generator-side support element (23) has a bearing seat for a shaft which is connected to the central pinion (205) in the second gearbox stage.

11. Drive apparatus according to one of Claims 1 to 10,
in which the support elements are integrated in a gearbox housing.

12. Drive apparatus according to one of Claims 1 to 11,
in which the bearing seat elements (211, 221, 231) can be removed from the support elements (21, 22, 23).

13. Drive apparatus according to one of Claims 1 to 12,
in which the connecting shaft (11) is in the form of a hollow shaft.

## Revendications

1. Dispositif d'entraînement d'une éolienne comprenant
- au moins deux éléments ( 21, 22, 23 ) de support à au moins trois branches pour le montage d'au moins trois arbres ( 201 ) de pignon, qui sont montés respectivement au moyen de palier ( 212, 222, 232 ) d'arbre de pignon disposés en des coins des éléments de support, paliers qui sont fixés par des éléments ( 211, 221, 231 ) de coussinet de palier aux éléments de support, au moins un élément ( 21 ) de support étant conformé supplémentairement pour le montage d'un arbre ( 11 ) de raccordement, qui peut être relié à un moyeu de rotor, qui est entouré par cet élément ( 21 ) de support et dont l'axe passe par le centre de l'élément de support,
- un premier étage ( 202, 203 ) d'engrenage, qui comporte une roue ( 202 ) centrale à denture extérieure qui est fixée à l'arbre de raccordement et qui engrène avec au moins trois pignons du premier étage d'engrenage, lesquels sont disposés en des premières extrémités des arbres ( 201 ) de pignon,
- au moins trois roues (204) dentées, montées en des deuxièmes extrémités des arbres de pignon, d'un deuxième étage d'engrenage, roues qui engrènent avec un pignon ( 205 ) central du deuxième étage d'engrenage.

2. Dispositif d'entraînement suivant la revendication 1,
dans lequel le pignon ( 205 ) central du deuxième étage d'engrenage est relié directement à un arbre (207) de génératrice ou de moteur.

3. Dispositif d'entraînement suivant la revendication 1,
dans lequel le pignon ( 205 ) central du deuxième étage d'engrenage est relié à un arbre de génératrice ou de moteur par un accouplement.

4. Dispositif d'entraînement suivant la revendication 1,
dans lequel le pignon ( 205 ) central du deuxième étage d'engrenage est relié à un arbre ( 11 ) de génératrice ou de moteur par un autre étage d'engrenage.

5. Dispositif d'entraînement suivant l'une des revendications 1 à 4, dans lequel l'arbre de raccordement, qui peut être relié au moyeu du rotor, est un arbre ( 11) de rotor et dans lequel les premières extrémités des arbres ( 201 ) de pignon sont des extrémités du côté du rotor et dans lequel les deuxièmes extrémités des arbres ( 201 ) de pignon sont des extrémités du côté de la génératrice.

6. Dispositif d'entraînement suivant la revendication 5,
dans lequel il est prévu trois éléments (21, 22, 23) de support et dans lequel un élément (21) de support est disposé du côté du rotor et dans lequel un élément ( 23) de support est disposé du côté de la génératrice et dans lequel un élément (22) central de support est disposé axialement entre l'élément (21) de support du côté du rotor et l'élément ( 23 ) de support du côté de la génératrice.

7. Dispositif d'entraînement suivant la revendication 6,
dans lequel la roue ( 202 ) centrale et les pignons ( 203 ) du premier étage d'engrenage sont disposés axialement entre l'élément ( 21 ) de support du côté du rotor et l'élément ( 22 ) central de support.

8. Dispositif d'entraînement suivant l'une des revendications 6 ou 7,
dans lequel les roues ( 204 ) dentées et le pignon (205) central du deuxième étage d'engrenage sont disposés axialement entre l'élément ( 22 ) central de support et l'élément ( 23) de support du côté de la génératrice.

9. Dispositif d'entraînement suivant l'une des revendications 6 à 8,
dans lequel l'élément ( 21 ) de support du côté du rotor et l'élément (22) central de support ont des coussinets de palier pour l'arbre ( 11 ) du rotor.

10. Dispositif d'entraînement suivant l'une des revendications 6 à 8,
dans lequel l'élément (23) de support du côté de la génératrice a un coussinet de palier pour un arbre relié au pignon ( 205 ) central du deuxième étage d'engrenage.

11. Dispositif d'entraînement suivant l'une des revendications 1 à 10,
dans lequel les éléments de support sont intégrés dans un carter d'engrenage.

12. Dispositif d'entraînement suivant l'une des revendications 1 à 11,
dans lequel les éléments ( 201, 221, 231) de coussinet de palier peuvent être démontés des éléments (21, 22, 23 ) de support.

13. Dispositif d'entraînement suivant l'une des revendications 1 à 12,
dans lequel l'arbre ( 11 ) de raccordement est sous la forme d'un arbre creux.
